# EUROPEAN PATENT APPLICATION

(11) **EP 4 726 553 A1**
(43) Date of publication of application: **15.04.2026**
(21) Application number: 24819139.7
(22) Date of filing: 20.05.2024
(51) Int. Cl.: G06F 11/20

(54) **CONTROL SYSTEM, CONTROL METHOD, AND CONTROL SERVICE PROVISION SYSTEM**

(30) Priority: 09.06.2023 JP 2023095759
(71) Applicant: Hitachi, Ltd., Tokyo 100-8280 (JP)
(72) Inventor: MIZUKAWA, Hideo, Tokyo 100-8280 (JP); KAWAI, Hidehiro, Tokyo 100-8280 (JP); NOMURA, Yuki, Tokyo 100-8280 (JP); FUKUSHIMA, Kaito, Tokyo 100-8280 (JP); SOMEYA, Tomohide, Tokyo 100-8280 (JP); HAMAZAKI, Yoshiyuki, Tokyo 100-8280 (JP)
(74) Representative: MERH-IP Matias Erny Reichl Hoffmann Patentanwälte PartG mbB
(86) International application number: PCT/JP2024/018520
(87) International publication number: WO 2024/252906

(57) **Abstract**

A control system 110 includes a diagnosis unit 32 configured to acquire a metric of a computer resource used to control a controlled object 120 and a device management unit 31 configured to detect a failure in a computer resource based on the metric, prepare a plurality of substitute candidates for a failed computer resource, and select a computer resource that substitutes for the failed computer resource from among the substitute candidates based on metrics about the plurality of substitute candidates. Furthermore, the device management unit 31 switches from the failed computer resource to the selected computer resource. Accordingly, it is possible to provide the control system, a control method, and a control service delivery system that can satisfy a punctuality requirement required by an application even when the computer resources cannot be strictly managed.

## Description

### Technical Field

The present invention relates to a control system, a control method, and a control service delivery system. In particular, the present invention relates to a control system, a control method, and a control service delivery system that can be optimally used when punctuality is required for controlling a controlled object.

### Background Art

For example, when a virtual machine (VM) operating on a public cloud is used as a control system that controls a controlled object, a hardware on which the virtual machine created is deployed is left to a cloud vendor.

Patent Literature 1 discloses a cloud service control device that includes a first communicator configured to control communication with a cloud service providing a plant control function of controlling a plant, a second communicator configured to control communication with a utilization device using service information related to the cloud service, a verifier configured to verify an operation state of the cloud service, a selector configured to select the cloud service on the basis of the verified operation state, and an information transferor configured to transfer the service information between the selected cloud service and the utilization device.

### Citation List

### Patent Literature

Patent Literature 1: Japanese Unexamined Patent Application Publication No. 2018-112829

### Summary of Invention

### Technical Problem

When a delay occurs in controlling a controlled object by a control system, it may be difficult to control it appropriately. In this case, punctuality is required by the control system. In a conventional control system, securing punctuality has been achieved by strictly managing computer resources under its management.

However, for example, when a virtual machine is used as a control system, computer resources cannot be strictly managed. Depending on where the virtual machine is deployed, the punctuality requirements required by an application may not be satisfied.

An object of the present invention is to provide a control system, a control method, and a control service delivery system that can satisfy a punctuality requirement required by an application even when computer resources cannot be strictly managed.

### Solution to Problem

In order to solve the above problems, this invention can provide a control system that includes: a metric acquisition unit configured to acquire a metric for a computer resource used to control a controlled object; a preparation unit configured to detect a failure in a computer resource based on the metric, prepare a plurality of substitute candidates for a failed computer resource, and select a computer resource that substitutes for the failed computer resource from among the substitute candidates based on metrics about the plurality of substitute candidates; and a switching unit configured to switch from the failed computer resource to a selected computer resource. In this case, even when the computer resources cannot be strictly managed, it is possible to provide a control system that can satisfy a punctuality requirement required by an application.

Here, when a first stage is detected as the failure, the preparation unit is allowed to select a computer resource that substitutes for the failed computer resource, and when a second stage in which the metric declines from the first stage is detected as the failure, the switching unit is allowed to switch to the selected computer resource. In this case, the substitute computer resource can be prepared in advance in the first stage, allowing quick switching in the second stage.

In addition, when the first stage is detected, the preparation unit is allowed to copy an internal state of the failed computer resource to the selected computer resource to match both states. In this case, after system switching is performed in the second stage, the computer resource with good metrics can be utilized immediately as a secondary and the like.

Furthermore, after matching the states, the preparation unit is allowed to acquire information input into the failed computer resource to maintain matching of the states. In this case, the computer resource with good metrics can be utilized more quickly.

Furthermore, the failure is allowed to be at least one of a clock delay and a communication delay. In this case, it is possible to respond to events that tend to cause problems in controlling the controlled object.

In addition, when the failure in the first stage is resolved after a computer resource that substitutes for the failed computer resource is selected, the preparation unit is allowed to withdraw a preparation for the selected computer resource. In this case, when the metrics are recovered, the preparation for the selected computer resource can be withdrawn.

Furthermore, the metric is communication performance between computer resources, and the preparation unit is allowed to select the substitute candidate with the best communication performance as a computer resource that substitutes for the failed computer resource. In this case, punctuality required by the control system is easily secured.

In addition, the metric is a clock correction amount, and the preparation unit is allowed to select a substitute candidate in which the clock correction amount thereof is close to that of a secondary of the failed computer resource, as a computer resource that substitutes for the failed computer resource. In this case, time deviation is less likely to occur between a primary promoted from the secondary and the substitute system that becomes a secondary.

In addition, the preparation unit is allowed to select a computer resource that substitutes for the failed computer resource based on an area where a computer resource is installed, in addition to metrics about the substitute candidates. In this case, availability can be increased.

Furthermore, the preparation unit selects a computer resource in the same data center as the area. In this case, the degree of dispersion of a preliminarily designed device arrangement can be maintained, and availability can be increased.

Furthermore, the preparation unit is allowed to select as the area, a computer resource in a data center in which a secondary of the failed computer resource is not present. In this case, the computer resources can be arranged in a dispersed manner, and availability can be increased.

Furthermore, the preparation unit is allowed to select in advance an area in which the substitute candidates are prepared for every predetermined period. In this case, computer resources disposed in areas with good metrics can be selected in advance.

Furthermore, the switching unit is allowed to set a computer resource that has been a secondary of the failed computer resource as a primary, and sets the selected computer resource as a secondary. In this case, a computer resource with good metrics can be assigned as the secondary.

Further, the present invention can provide a control method that includes, by executing a program recorded in memory by a processor: acquiring a metric for a computer resource used to control a controlled object; detecting a failure in a computer resource based on the metric, preparing a plurality of substitute candidates for a failed computer resource, and selecting a computer resource that substitutes for the failed computer resource from among the substitute candidates based on metrics about the plurality of substitute candidates; and performing switching from the failed computer resource to the selected computer resource. In this case, even when the computer resources cannot be strictly managed, it is possible to provide a control method that can satisfy a punctuality requirement required by an application.

Furthermore, this invention can provide a control service delivery system that includes a controlled object, and a control system configured to control the controlled object. In the control service delivery system, the control system includes: a metric acquisition unit configured to acquire a metric for a computer resource used to control the controlled object; a preparation unit configured to detect a failure in a computer resource based on the metric, prepare a plurality of substitute candidates for a failed computer resource, and select a computer resource that substitutes for the failed computer resource from among the substitute candidates based on metrics about the plurality of substitute candidates; and a switching unit configured to switch from the failed computer resource to the selected computer resource. In this case, even when the computer resources cannot be strictly managed, it is possible to provide a control service delivery system that can satisfy a punctuality requirement required by an application.

### Advantageous Effects of Invention

According to the present invention, it is possible to provide the control system, a control method, and a control service delivery system that can satisfy a punctuality requirement required by an application even when the computer resources cannot be strictly managed.

### Brief Description of Drawings

Fig. 1 is a diagram illustrating an exemplary overall configuration of a control service delivery system to which embodiments are applied.
Fig. 2 is a diagram illustrating system configuration information.
Fig. 3 is a diagram illustrating operation requirement information.
Fig. 4 is a diagram illustrating device state information.
Fig. 5A is a diagram illustrating substitute system management information.
Fig. 5B is a diagram illustrating substitute system metrics information.
Fig. 6 is a diagram illustrating a processing flow of a device management unit.
Fig. 7 is a diagram illustrating a processing flow in which the device management unit creates a substitute system.
Fig. 8 is a diagram illustrating a system management screen in a state before a control device enters a warning state and in a state where a control system is operating normally (normal state).
Fig. 9 is a diagram illustrating the system management screen when the control device enters the warning state.
Fig. 10 is a diagram illustrating the system management screen when a substitute system is selected.
Fig. 11 is a diagram illustrating the system management screen when the control device enters an abnormal state.
Fig. 12 is a diagram illustrating the system management screen when switching to the substitute system.

### Description of Embodiments

Hereinafter, embodiments of the present invention will be described with reference to the accompanying drawings.

### <General Description of Control Service Delivery System 100>

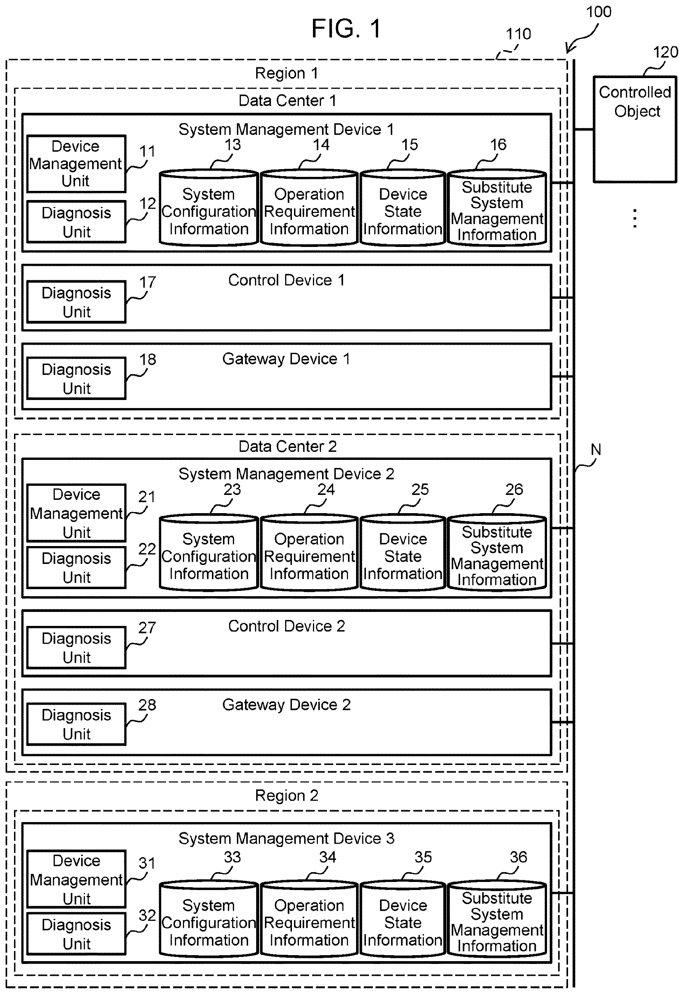

Fig. 1 is a diagram illustrating an exemplary overall configuration of a control service delivery system 100 to which the embodiments are applied.

In the control service delivery system 100, a control system 110 controls a controlled object 120. The control system 110 is, for example, provided as a service on a cloud. It exchanges control information and other information through a network N to control the controlled object 120.

The controlled object 120 is, for example, an industrial plant. The industrial plant is not particularly limited, and examples include industrial plants, such as steel manufacturing plants and chemical plants. In addition, examples of the industrial plant include power plants that generate electricity using thermal power, hydroelectric power, nuclear power, solar power, wind power, and the like. Furthermore, examples of the industrial plant include oil production plants that extract crude oil from oil wells, LNG plants that extract liquified natural gas (LNG) from gas fields, and oil refinery plants that refine crude oil. For example, when the controlled object 120 is an oil refinery plant, the control system 110 receives detection signals from temperature sensors, pressure sensors, flowmeters, and the like provided in equipment, such as a crude oil heating furnace, a distillation tower, and catalysts and hydrogenated desulfurization towers, which constitute the oil refinery plant. The control system 110 then transmits control signals to control the temperature, pressure, flow rate, opening and closing of valves, and the like of these pieces of equipment based on the detection signals. In addition, the control system 110 is not limited to such industrial plants, but may be a railway control system that controls railway equipment. In this case, the controlled object 120 corresponds to, for example, a railway signal, a railway switch (point), a railway crossing, or the like. Although only one controlled object 120 is described in Fig. 1, a plurality of controlled objects 120 may be controlled.

The control system 110 includes data centers 1, 2 that are installed in a region 1. Here, a "region" is a geographical location where each of the data centers 1, 2 is installed.

The data center 1 includes a system management device 1, a control device 1, and a gateway device 1. Furthermore, the data center 2 includes a system management device 2, a control device 2, and a gateway device 2. A system management device 3 is installed in a region 2. The system management devices 1 to 3, the control devices 1, 2, and the gateway devices 1, 2 are components that constitute the control system 110 are examples of computer resources (computer resources). Each of them is a virtual machine (VM). However, they may be physical machines. In addition, a mix of the virtual machines and the physical machines may be included. Furthermore, containers may be used instead of the virtual machines.

The system management devices 1 to 3 manage the components of the control system 110. Each of the system management devices 1 to 3 can manage each of the control devices 1, 2 and each of the gateway devices 1, 2. That is, the system management devices 1 to 3 can manage the control devices 1, 2 and the gateway devices 1, 2 beyond the boundaries of the regions and data centers.

The control devices 1, 2 make a control determination for the controlled object 120. The gateway devices 1, 2 communicate with the controlled object 120. The control devices 1, 2 exchange detection signals, control signals, and the like through the gateway devices 1, 2, to control the controlled object 120.

The system management device 1 includes a device management unit 11, a diagnosis unit 12, system configuration information 13, operation requirement information 14, device state information 15, and substitute system management information 16. Similarly, the system management device 2 includes a device management unit 21, a diagnosis unit 22, system configuration information 23, operation requirement information 24, device state information 25, and substitute system management information 26. Further, similarly, the system management device 2 includes a device management unit 31, a diagnosis unit 32, system configuration information 33, operation requirement information 34, device state information 35, and substitute system management information 36.

The control device 1 includes a diagnosis unit 17, and the control device 2 includes a diagnosis unit 27.

The gateway device 1 includes a diagnosis unit 18, and the control device 2 includes a diagnosis unit 28.

The device management units 11, 21, 31 manage the operation of the respective system management devices 1 to 3 to which they belong. Although the details will be described later, the device management units 11, 21, 31 function as preparation units that detect failures in the components of the control system 110 based on metrics, prepare a plurality of substitute candidates for a failed component, compare the metrics about the plurality of substitute candidates according to predetermined requirements, and select a substitute candidate as a component that substitutes for the failed component. In this case, the failure is in a warning state, which is an example of a first stage. Hereinafter, the selected substitute candidate is referred to as a substitute system in some cases.

At this time, for example, the device management units 11, 21, 31 compare the metrics of each substitute candidate according to the predetermined requirements and select the best one. In addition, when the severity of the failure declines and an abnormality occurs, the device management units 11, 21, 31 function as switching units that performs switching from the failed component to the selected component. In this case, the failure is in an abnormal state, which is an example of a second stage. A decline in the severity of the failure refers to a case where the metrics further decline from the warning state.

The diagnosis units 12, 22, 32 perform the diagnosis of the metrics. The metrics are quantifications of the performance of the control system 110. In the embodiments, some metrics are closed to a single component among the components in the control system 110, and others span a plurality of components. Examples of the former include, for example, a central processing unit (CPU) performance and a clock accuracy. The clock accuracy can be evaluated by a clock delay. The diagnosis unit 12 can determine that the greater the clock delay, the more the clock accuracy declines. The latter corresponds to communication performance between the respective components. The communication performance can be evaluated, for example, by an operational time required for coordinated operation between components. The diagnosis unit 12 can determine that the longer this time, the greater a communication delay, and the more the communication performance declines. The diagnosis units 17, 27 and the diagnosis units 18, 28 have similar functions. These diagnosis units function as metric acquisition units that acquire the metrics of the computer resources used to control the controlled object 120.

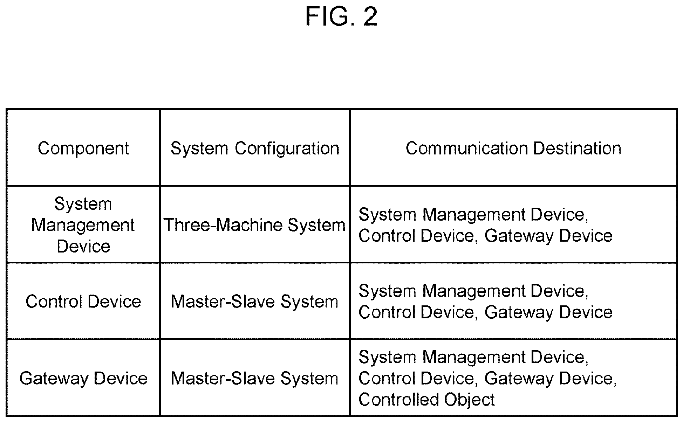

Fig. 2 is a diagram illustrating the system configuration information 13, 23, 33.

The system configuration information 13, 23, 33 are information about the components that constitute the control system 110.

The illustrated system configuration information 13, 23, 33 are composed of items of component, system configuration, and communication destination. The component refers to a type of component, and any one of the system management device, control device, and gateway device applies. The system configuration is the information about the redundant configuration. A master-slave system indicates that it includes a master system (active machine) and a slave system (spare machine), while a three-machine system indicates that it includes a master system (active machine) and two slave systems (spare machines). The communication destination refers to the information that indicates the other end with which each component communicates.

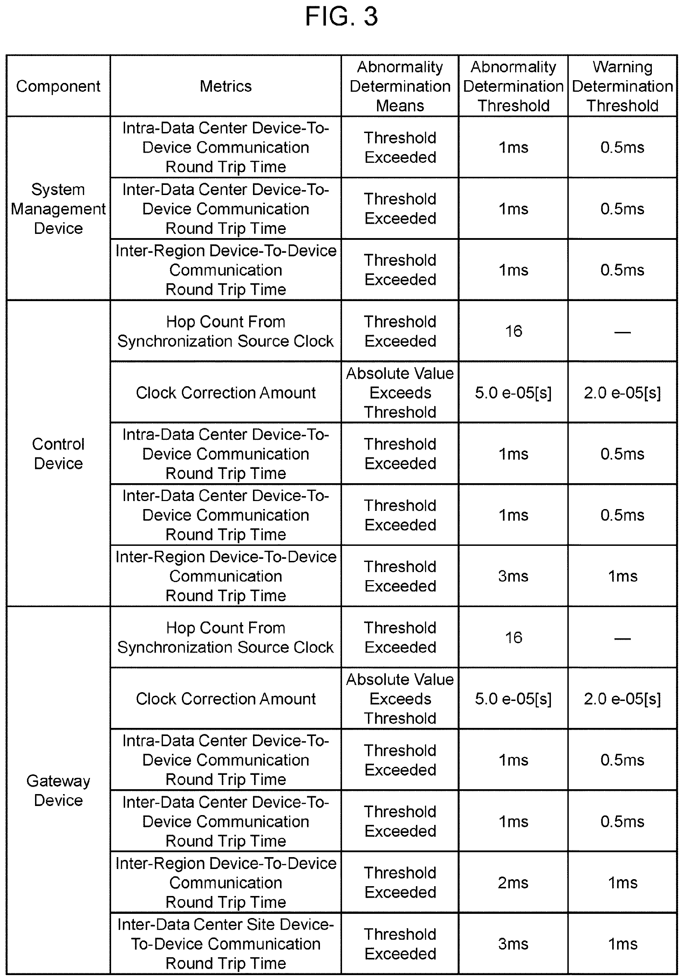

Fig. 3 is a diagram illustrating the operation requirement information 14, 24, 34.

The operation requirement information 14, 24, 34 are information on the requirements of the metrics required for each component.

The illustrated operation requirement information 14, 24, 34 are composed of respective items of component, metrics, abnormality determination means, abnormality determination threshold, and warning determination threshold. The component refers to a type of component, and any one of the system management device, control device, and gateway device applies. Then, for each component, the metrics, abnormality determination means, abnormality determination threshold, and warning determination threshold are specified. Of these, the metrics refer to metric items that are required for each component. In addition, the abnormality determination means is a method for determining whether or not each component is in an abnormal state or a method for determining whether or not it is in a warning state. For example, if this is "threshold exceeded," it means that an abnormal state or a warning state is determined when a predetermined threshold is exceeded. That is, the diagnosis units 12, 22, 32 determine that it is an abnormal state when the abnormality determination threshold is exceeded. The diagnosis units 12, 22, 32 also determine that it is a warning state when the warning determination threshold is exceeded. When determining an abnormal state or a warning state, it may be determined to enter these states when the thresholds are exceeded once. However, it may also be determined to enter these states when the thresholds are exceeded a certain number of times consecutively.

To further elaborate on the metric items, intra-data center device-to-device communication is the operational time required for coordinated operation between components within the same data center. For example, it corresponds to the operational time required between the system management device 1 and the control device 1, and the operational time required between the system management device 1 and the gateway device 1. Inter-data center device-to-device communication is the operational time required for coordinated operation between components in different data centers. For example, it corresponds to the operational time required between the system management device 1 and the system management device 2. Inter-region device-to-device communication is the operational time required between components in different regions. For example, it corresponds to the operational time required between the system management device 1 in the region 1 and the system management device 3 in the region 2. A hop count from a synchronization source clock is the number of hops from the device that serves as the synchronization source for the clock. A clock correction amount is the amount of correction of the clock.

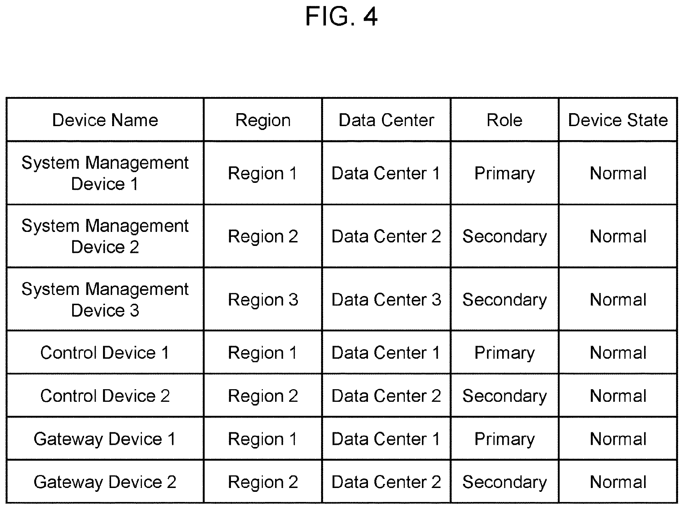

Fig. 4 is a diagram illustrating the device state information 15, 25, 35.

The device state information 15, 25, 35 are information on the operation state of each component.

The illustrated device state information 15, 25, 35 are composed of respective items of device name, region, data center, role, and device state. The device name is the device name of a component and includes the above-described system management devices 1 to 3, gateway devices 1, 2, and gateway devices 1, 2. The region is a geographical location where a data center is installed. The data center refers to the name of the data center in which each component is installed and is any of the data centers 1 to 3. The role indicates whether the operation state of each component is primary or secondary. The device state indicates whether the operation state of a device is normal or abnormal. Fig. 4 indicates that all components are normal.

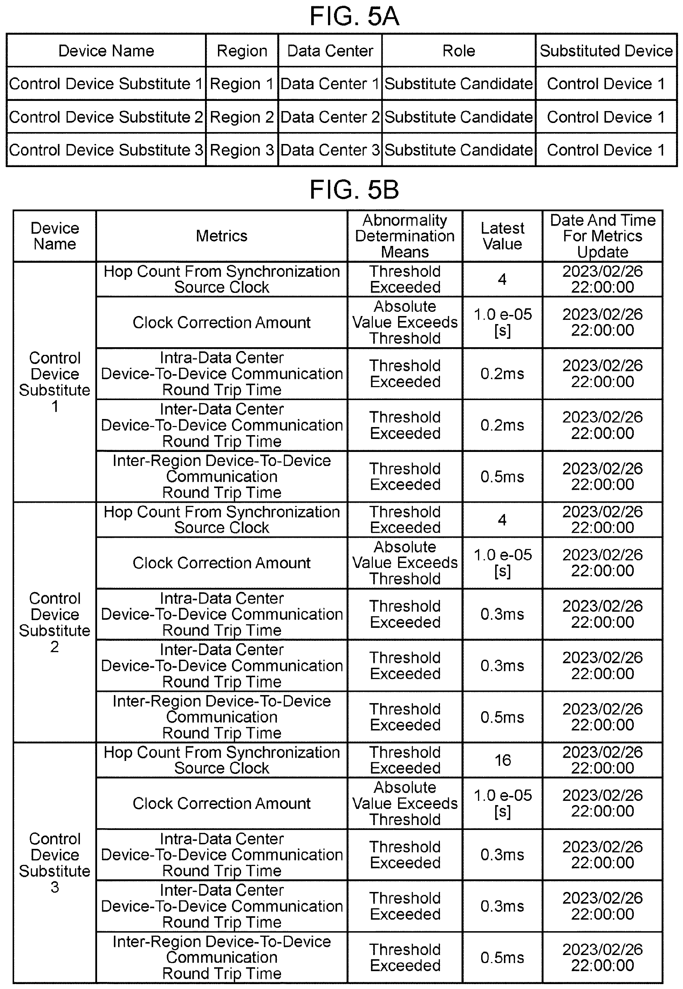

Fig. 5A is a diagram illustrating the substitute system management information 16, 26, 36.

The substitute system management information 16, 26, 36 are information on the components that become substitute candidates.

The illustrated substitute system management information 16, 26, 36 are composed of respective items of device name, region, data center, role, and substituted device. The device name is the device name of a component that becomes a substitute candidate. Here, it means that the components that become substitute candidates are control device substitutes 1 to 3. The region is a geographical location where a data center is installed. The data center refers to the name of the data center in which each component that becomes a substitute candidate is installed, and is any of the data centers 1 to 3. The role refers to the roles of these components and indicates that they are substitute candidates. As in the case illustrated in Fig. 4, the substituted device is blank in the initial state when no failure has occurred in each component. However, when a failure occurs in any component, the device name of the component where the failure has occurred is entered. In this case, it indicates a case where a failure has occurred in the control device 1.

Fig. 5B is a diagram illustrating substitute system metrics information.

The substitute system metrics information is metrics information on the components that become substitute candidates.

The illustrated substitute system metrics information is composed of respective items of device name, metrics, abnormality determination means, latest value, and date and time for metric update. The device name is the device name of a component that becomes a substitute candidate and includes the control device substitutes 1 to 3 in Fig. 5A. The metrics are metric items that are required for each component that becomes a substitute candidate. The abnormality determination means is a method for determining whether or not the component that becomes a substitute candidate is abnormal. The latest value is the latest metric for the component that becomes a substitute candidate. The date and time for metric update are the date and time when the latest value of the metric was acquired.

### <Description of Operations of Device Management Unit 11>

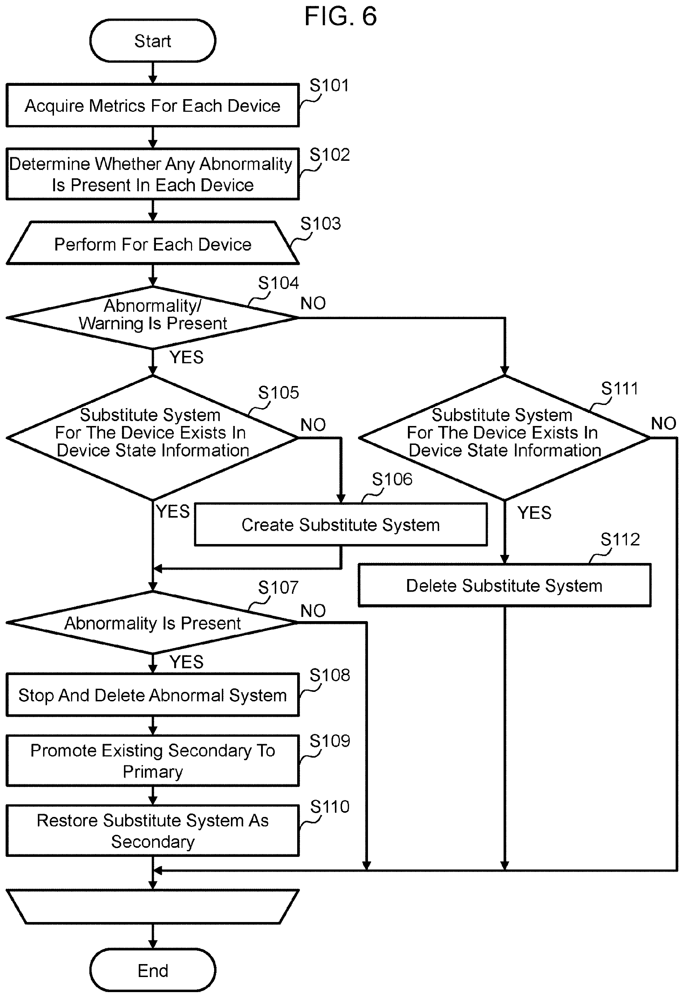

Fig. 6 is a diagram illustrating a processing flow of the device management unit 11.

Fig. 6 illustrates a case in which the device management unit 11 is the primary and the device management unit 11 performs a series of processing.

First, the diagnosis unit 12 diagnoses the metrics for each device (each component) in the system management device 1. The device management unit 11 acquires the metrics for each device from the diagnosis unit 12 (S101).

Next, the device management unit 11 determines whether or not any abnormality is present in each device based on the metrics for each device (S102). This is performed for each device in the following flow (S103).

First, the device management unit 11 determines whether or not an abnormality or warning has occurred in one device (S104).

If an abnormality or warning has occurred (Y (Yes) in S104), the device management unit 11 refers to the device state information 15 to determine whether or not a substitute system for the device in which the abnormality or warning has occurred exists (S105).

As a result, if no substitute system exists (N (No) in S105), the device management unit 11 creates a substitute system (S106).

In S104, if a substitute system exists (Y in S105), and after S106, the device management unit 11 determines whether or not an abnormality is present (S107).

As a result, if no abnormality is present (N in S107), the device management unit 11 terminates the processing for the device.

On the contrary, if an abnormality is present (Y in S107), the device management unit 11 stops and deletes the abnormal system (S108).

Furthermore, the device management unit 11 promotes the existing secondary to a primary (S109). That is, the device that was the secondary of the device in which the abnormality occurred is set as the primary.

Then, the device management unit 11 restores the substitute system as the secondary (S110).

In addition, in S103, if an abnormality or warning has not occurred (N in S104), the device management unit 11 determines whether or not a substitute system for the device exists in the device state information (S111).

If a substitute system for the device exists (Y in S111), the substitute system is deleted (S112). For example, this case corresponds to a case where a metric for the device has declined and a warning has occurred once, but then, the metric has recovered, and the warning has been withdrawn.

On the other hand, if no substitute system for the device exists (N in S111), the processing for the device is terminated.

In this case, as described in S106, it can be said that when the first stage is detected as a failure, the device management unit 11 selects a computer resource that substitutes for the failed computer resource. The first stage is a stage of entering the warning state.

In addition, as described in S107 to S110, it can be said that when the second stage, in which the metric declines from the first stage, is detected as a failure, the device management unit 11 switches to the selected device. The second stage is a stage of entering the abnormal state.

Furthermore, as described in S112, it can be said that when the warning state is resolved after the device that substitutes for the failed device is selected, the device management unit 11 withdraws the preparation for the selected device.

Moreover, as described in S109 to S110, it can be said that the device management unit 11 sets a device that has been the secondary of the failed device as a primary and sets the selected substitute system as a secondary.

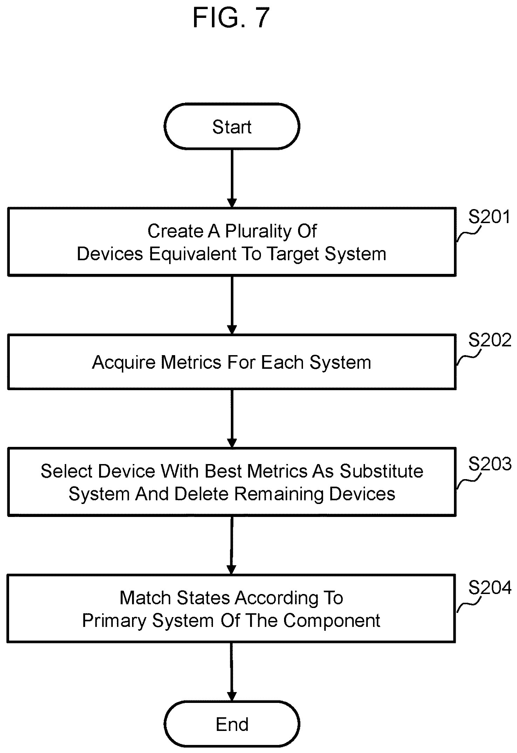

Fig. 7 is a diagram illustrating a processing flow in which the device management unit 11 creates a substitute system. That is, Fig. 7 is a diagram describing S105 in Fig. 6 in detail.

First, the device management unit 11 creates a plurality of devices equivalent to a target system (component in which an abnormality or warning has occurred) (S201). That is, the device management unit 11 prepares a plurality of substitute candidates.

Next, the device management unit 11 acquires the metrics for each system created in S201 (S202). That is, it acquires the metrics for each of the plurality of substitute candidates. Specifically, the device management unit 11 acquires a clock delay as the clock accuracy, the operational time required for coordinated operation between devices as the communication performance, and the like.

Next, the device management unit 11 selects the device with the best metrics as a substitute system and deletes the remaining devices (S203). That is, the device management unit 11 selects the one with the best metrics from among the substitute candidates as a substitute system that substitutes for the failed computer resource.

Furthermore, the device management unit 11 matches the states according to the primary system of the component (S204). In this case, the memory information held by the primary system is copied, and the internal states are matched. By matching the internal states at the warning stage, it is possible to immediately restore a device with good characteristics as a secondary system after systems are switched in the event of an abnormality. In addition, after the internal states are matched, the data input to the primary (or secondary) is acquired, and the matching of the internal states of the substitute system and the primary (or secondary) is maintained. In a control system, broadcast/multicast communication is often used. In this case, the information can be extracted simply by connecting to the network N. When unicast communication is taking place, the states are matched by having the primary (or secondary) send along the information.

In addition, the device management unit 11 may select in advance an area in which substitute candidates are prepared for every predetermined period. The operational time required for coordinated operation varies depending on, for example, between regions, the time for performing communication, and the like. Therefore, the device management unit 11 acquires the metrics from the diagnosis unit 12 for every predetermined period and determines in advance the area in which substitute candidates are prepared. This allows selecting in advance those with good metrics as substitute candidates.

### <Method of Selecting Substitute System>

The following describes a method of selecting a substitute system from among the substitute candidates according to methods (1) through (4) with reference to Figs. 5A and 5B. Here, it describes a case in which a substitute system that substitutes for the control device 1 is selected when the control device 1 in the data center 1 enters a warning state.
(1) Simply select the one with good metrics.

The method (1) is the one performed in S203 in Fig. 7. In the example of Fig. 5B, the hop count from the synchronization source clock, the clock correction amount, and the inter-region device-to-device communication are equivalent between the control device substitute 1 and the control device substitute 2 when they are compared. On the other hand, those between intra-data center devices and between inter-data center devices for the control device substitute 1 are better than those for the control device substitute 2. Therefore, the control device substitute 1 is selected. With this selection method, a device with higher real-time performance can be adopted.

Since the control device substitute 3 has a too large hop count from the synchronization source clock, which does not meet the requirement of the abnormality determination means in Fig. 5B, it does not become a target of the metric comparison.

In the method (1), it can be said that the metric is the communication performance between devices, and the device management unit 11 selects a substitute candidate with the best communication performance as a substitute system that substitutes for the failed device.

(2) Prioritize the data center that meets the metrics requirements and is the same as the one for the substituted device as much as possible.

In the example of Fig. 5A, when comparing the control device substitute 1 and the control device substitute 2, the control device substitute 1 is located in the same data center 1 as the control device 1. However, the control device substitute 2 is located in the data center 2, which is different from the control device 1. Therefore, the control device substitute 1 is selected. With this selection method, the degree of dispersion of a preliminarily designed device arrangement can be maintained, and availability can be increased.

(3) Prioritize the data center that meets the metrics requirements and in which the secondary of the failed device does not exist.

For example, if the secondary of the control device 1 is the control device 2, the one belonging to the data centers 1, 3, which are the data centers other than the data center 2 to which the control device 2 belongs, is selected. In this case, the control device substitute 1 belonging to the data center 1 or the control device substitute 3 belonging to the data center 3 is selected.

In this case, the devices can be arranged in a dispersed manner, and availability can be increased.

In the methods (2) and (3), it can be said that the device management unit 11 selects a substitute system that substitutes for the failed device based on an area where a computer resource is installed, in addition to the metrics about the substitute candidates. In addition, in the method (2), it can be said that the device management unit 11 selects a device in the same data center as the area as a substitute system. Furthermore, in the method (3), it can be said that the device management unit 11 selects a device in a data center as the area, in which the secondary of the failed computer resource does not exist, as a substitute system.

(4) Select the one that meets the metrics requirements and has a clock correction amount close to that of the secondary of the failed device.

For example, if the secondary of the control device 1 is the control device 2, the one having a clock correction amount close to that of the control device 2 is selected from among the control device substitutes 1 to 3.

In this case, time deviation is less likely to occur between a primary promoted from the secondary and the substitute system that becomes a secondary. This makes it less likely to have a mismatch in the states due to deviations between the execution timing of a program executed periodically and the reception timing of input data.

In the method (4), it can be said that the metric is the clock correction amount, and the device management unit 11 selects a substitute candidate, the clock correction amount of which is close to that of the secondary of the failed device as a substitute system that substitutes for the failed device.

### <Description of System Management Screen>

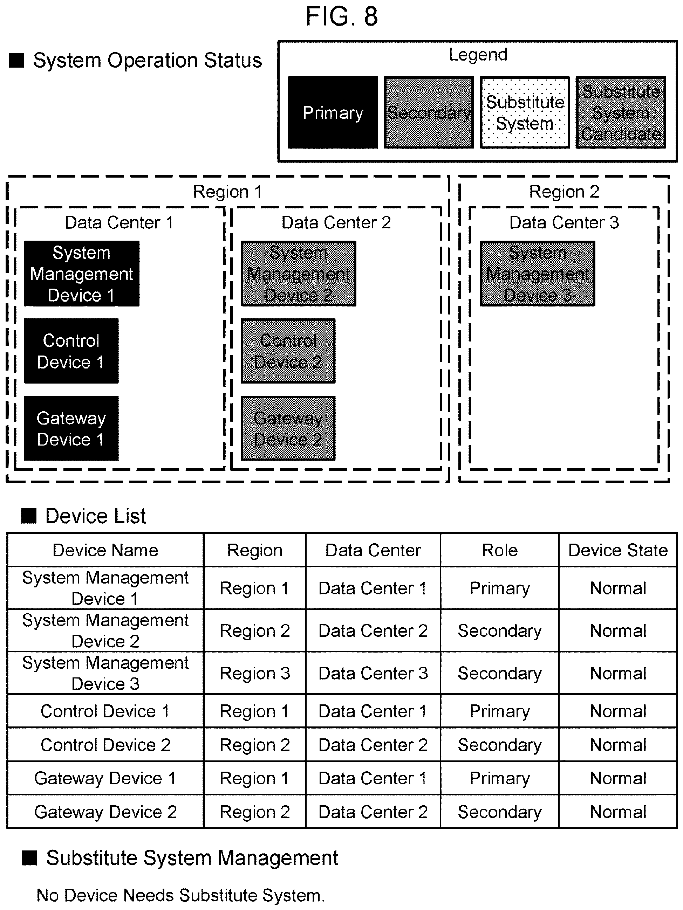

Figs. 8 to 12 are diagrams illustrating a system management screen. Here, a description will be given of the following case as an example. In this case, the control device 1 enters a warning state because the metrics have declined and then enters an abnormal state because the metrics have further declined, and the control device substitute 1 is selected as a substitute system.

Fig. 8 is a diagram illustrating the system management screen in a state before the control device 1 enters a warning state and in a state where the control system 110 is operating normally (normal state).

In the upper tier portion of the illustrated system management screen, a system operation status is displayed. This indicates that the system management device 1, the control device 1, and the gateway device 1, which are installed in the data center 1 in the region 1, are the primaries. It also indicates that the system management device 2 installed in the data center 2 in the region 1, the system management device 3, the control device 2, and the gateway device 2 are the secondaries.

In addition, in the middle tier portion of the illustrated system management screen, a device list is displayed. The device list is the same as Fig. 4. The device name, region, data center, role, and device state are displayed for each component of the system management devices 1 to 3, control devices 1, 2, and gateway devices 1, 2. Fig. 8 indicates that all components are normal.

Furthermore, in the lower tier portion of the illustrated system management screen, information on substitute system management is displayed. In Fig. 8, since all components are normal, no substitute system has been created, and the message "No Device Needs a Substitute System." is displayed.

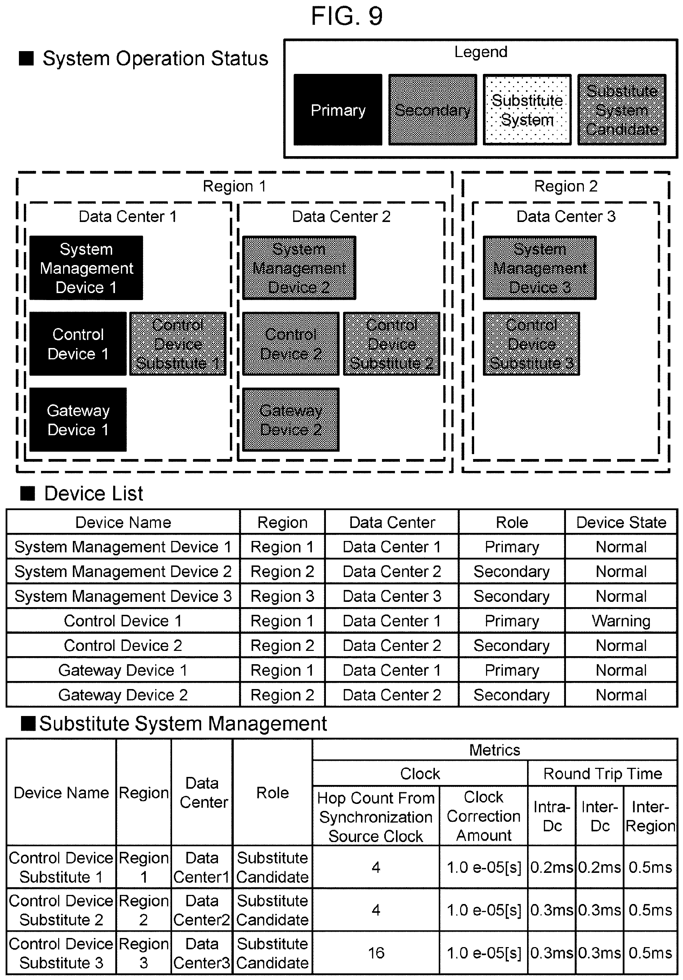

Fig. 9 is a diagram illustrating the system management screen when the control device 1 enters the warning state.

On the illustrated system management screen, the system operation status in the upper tier portion indicates that substitute candidates have been prepared. In this case, it indicates that the control device substitutes 1 to 3 have been prepared as substitute candidates in the data centers 1 to 3, respectively.

In addition, on the illustrated system management screen, the device list in the middle tier portion indicates that the device state of the control device 1 has become warning.

Furthermore, on the illustrated system management screen, the substitute system management in the lower tier portion displays the device name, region, data center, role, and metrics for the control device substitutes 1 to 3. Note that a selection button may be provided on this substitute system management screen, allowing a system administrator to select a substitute system.

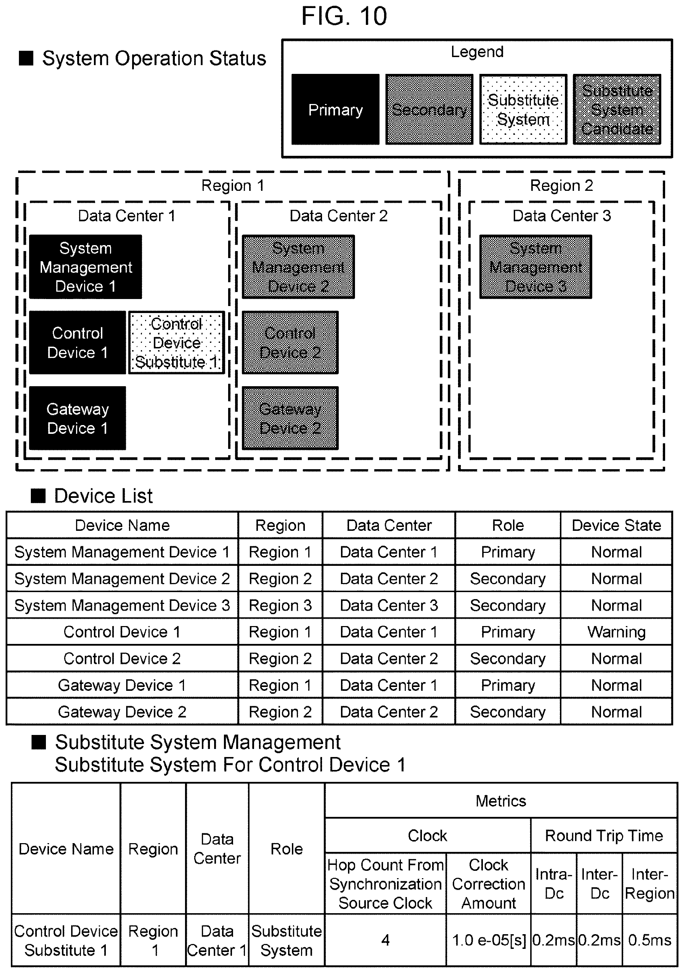

Fig. 10 is a diagram illustrating the system management screen when a substitute system is selected.

On the illustrated system management screen, the system operation status in the upper tier portion indicates that the control device substitute 1 has been selected as a substitute system. In this case, the one with the best metrics among the control device substitutes 1 to 3 is selected as the substitute system.

Additionally, on the illustrated system management screen, the device list in the middle tier portion indicates that the device state of the control device 1 remains warning.

Furthermore, on the illustrated system management screen, the substitute system management in the lower tier portion displays the device name, region, data center, role, and metrics for the selected control device substitute 1.

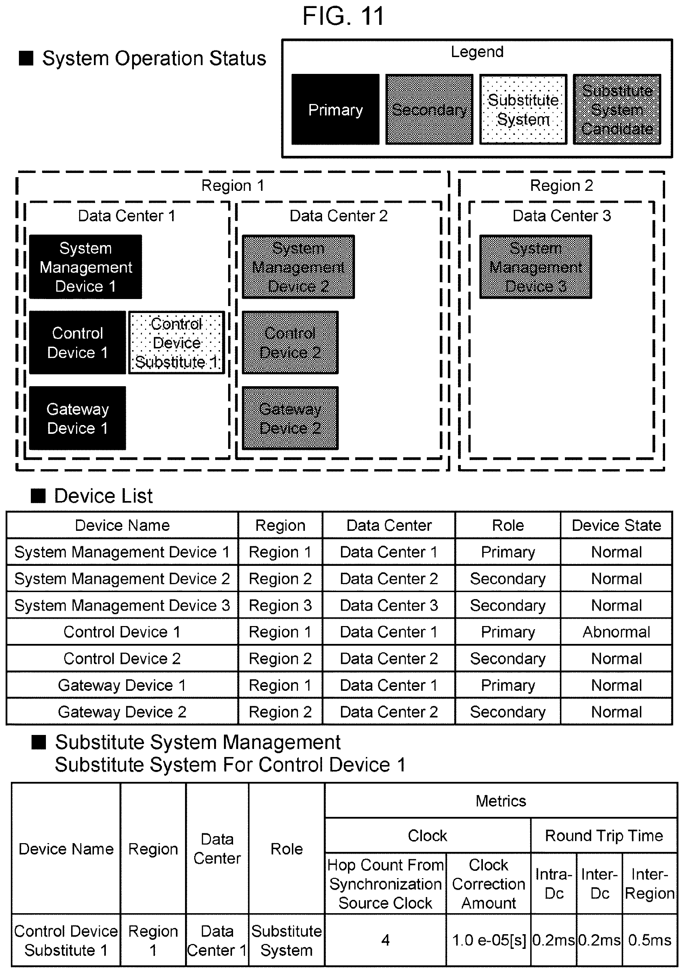

Fig. 11 is a diagram illustrating the system management screen when the control device 1 enters an abnormal state.

On the illustrated system management screen, the device list in the middle tier portion indicates that the device state of the control device 1 has transitioned from warning to abnormal. The other screens are the same as those in Fig. 10.

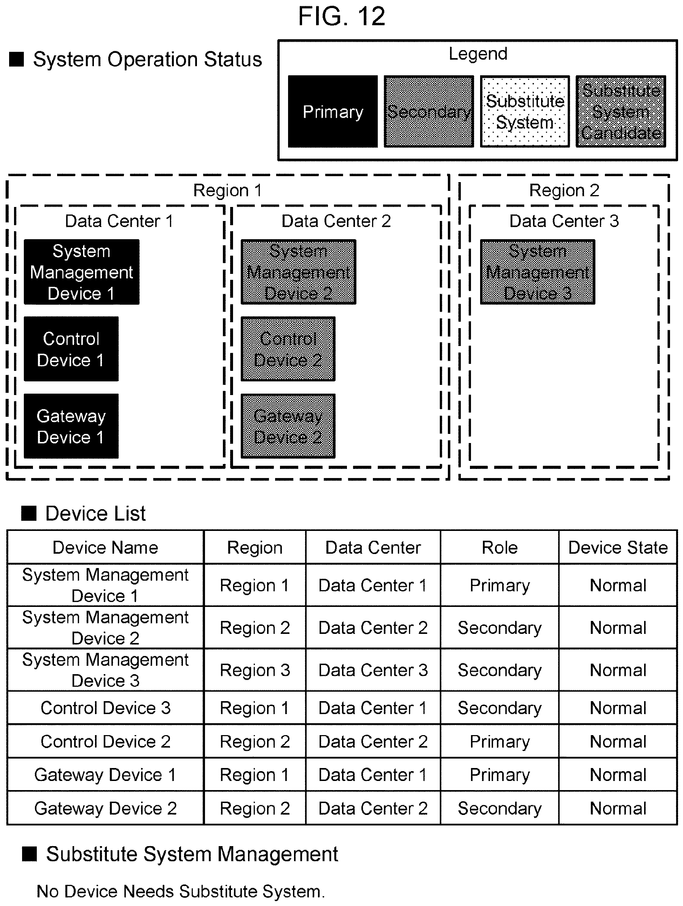

Fig. 12 is a diagram illustrating the system management screen when switching to the substitute system.

On the illustrated system management screen, the system operation status in the upper tier portion indicates that the control device 2 has been promoted to the primary. It also indicates that the control device substitute 1 has become a secondary as a control device 3.

In addition, on the illustrated system management screen, the device list in the middle tier portion indicates that the control device 3 has entered instead of the control device 1. The device state of the control device 3 is normal.

Furthermore, on the illustrated system management screen, since all components are normal, the substitute system management in the lower tier portion displays the message "No Device Needs a Substitute System."

With the control system 110 described above, the punctuality requirement required by an application can be satisfied even when components, which are exemplary computer resources, cannot be strictly managed.

According to the above-described form, the types of components as exemplary computer resources are, but not limited to, the system management device, control device, and gateway device. As long as the configuration is capable of controlling the controlled object 120 and has redundancy, the types and number of components can be set freely. In addition, according to the above-described form, the control system 110 is exemplified as a virtual machine or the like that operates on a public cloud. However, the control system 110 is not limited to this and need not operate on a cloud.

### <Description of Control Method>

The processing performed by the control system 110 described above is realized by the cooperation of software and hardware resources. That is, a processor inside a computer that constitutes the control system 110 loads the software that realizes each of the above functions in a main storage unit and executes it, thereby realizing each of these functions.

Therefore, the processing performed by the control system 110 can be considered as a control method that includes, by executing the program recorded in memory by the processor, acquiring the metrics for the components used to control the controlled object 120, detecting failures in the components based on the metrics, preparing a plurality of substitute candidates for the failed component, selecting a component that substitutes for a failed component from among the substitute candidates based on the metrics about the plurality of substitute candidates, and switching from the failed component to the selected component.

In this case, this processing need not be performed by a single computer device, but may be realized by a plurality of computer devices.

While the embodiments have been described above, the technical scope of the present invention is not limited to the scope described in the embodiments above. It is apparent from the description of the claims that various changes or improvements to the above embodiments are also included in the technical scope of the present invention.

### List of Reference Signs

11, 21, 31: device management unit
12, 22, 32: diagnosis unit
100: control service delivery system
110: control system
120: controlled object

## Claims

1. A control system comprising:
a metric acquisition unit configured to acquire a metric for a computer resource used to control a controlled object;
a preparation unit configured to detect a failure in a computer resource based on the metric, prepare a plurality of substitute candidates for a failed computer resource, and select a computer resource that substitutes for the failed computer resource from among the substitute candidates based on metrics about the plurality of substitute candidates; and
a switching unit configured to switch from the failed computer resource to a selected computer resource.

2. The control system according to claim 1, wherein
when a first stage is detected as the failure, the preparation unit selects a computer resource that substitutes for the failed computer resource, and
when a second stage in which the metric declines from the first stage is detected as the failure, the switching unit switches to the selected computer resource.

3. The control system according to claim 2, wherein
when the first stage is detected, the preparation unit copies an internal state of the failed computer resource to the selected computer resource to match both states.

4. The control system according to claim 3, wherein
after matching the states, the preparation unit acquires information that is input into the failed computer resource to maintain matching of states.

5. The control system according to claim 2, wherein
the failure is at least one of a clock delay and a communication delay.

6. The control system according to claim 2, wherein
when the failure in the first stage is resolved after a computer resource that substitutes for the failed computer resource is selected, the preparation unit withdraws preparation for the selected computer resource.

7. The control system according to claim 1, wherein
the metric is communication performance between computer resources, and
the preparation unit selects the substitute candidate with the best communication performance as a computer resource that substitutes for the failed computer resource.

8. The control system according to claim 1, wherein
the metric is a clock correction amount, and
the preparation unit selects the substitute candidate in which the clock correction amount is close to that of a secondary of the failed computer resource as a computer resource that substitutes for the failed computer resource.

9. The control system according to claim 1, wherein
the preparation unit selects a computer resource that substitutes for the failed computer resource based on an area where a computer resource is installed, in addition to metrics about the substitute candidates.

10. The control system according to claim 9, wherein
the preparation unit selects, as the area, a computer resource in the same data center.

11. The control system according to claim 9, wherein
the preparation unit selects, as the area, a computer resource in a data center in which a secondary of the failed computer resource is not present.

12. The control system according to claim 1, wherein
the preparation unit selects in advance an area in which the substitute candidates are prepared, for every predetermined period.

13. The control system according to claim 1, wherein
the switching unit sets a computer resource that has been a secondary of the failed computer resource as a primary, and sets the selected computer resource as a secondary.

14. A control method comprising:
by executing a program recorded in memory by a processor,
acquiring a metric for a computer resource used to control a controlled object;
detecting a failure in a computer resource based on the metric, preparing a plurality of substitute candidates for a failed computer resource, and selecting a computer resource that substitutes for the failed computer resource from among the substitute candidates based on metrics about the plurality of substitute candidates; and
performing switching from the failed computer resource to the selected computer resource.

15. A control service delivery system comprising
a controlled object, and a control system configured to control the controlled object, wherein
the control system includes:
a metric acquisition unit configured to acquire a metric for a computer resource used to control the controlled object;
a preparation unit configured to detect a failure in a computer resource based on the metric, prepare a plurality of substitute candidates for a failed computer resource, and select a computer resource that substitutes for the failed computer resource from among the substitute candidates based on metrics about the plurality of substitute candidates; and
a switching unit configured to switch from the failed computer resource to the selected computer resource.
